# EUROPEAN PATENT SPECIFICATION

(11) **EP 1 995 562 B1**
(45) Date of publication and mention of the grant of the patent: **10.07.2013**
(21) Application number: 07010149.8
(22) Date of filing: 22.05.2007
(51) Int. Cl.: G01C 21/34, G08G 1/0969

(54) **Method of route searching in a navigation device and corresponding navigation device**
Verfahren zur Routensuche in einer Navigationsvorrichtung und entsprechende Navigationsvorrichtung
Procédé de recherche de route dans un dispositif de navigation et dispositif de navigation correspondant

(43) Date of publication of application: 26.11.2008
(73) Proprietor: Alpine Electronics, Inc., Tokyo (JP)
(72) Inventor: Tanveer, Mohammed, 70567 Stuttgart (DE)
(74) Representative: Klunker . Schmitt-Nilson . Hirsch

(56) References cited:
- US-A1- 2002 169 543
- US-A1- 2004 039 520
- US-A1- 2005 090 970

## Description

### Background of the Invention

### Field of the Invention

The present invention is directed to a method of route searching in a navigation device for searching a route leading to a destination. The method according to the invention uses map information including a plurality of links, wherein in an expansion process for finding a path for the route to be searched, the links are sequentially stored in a link list which is indicative of links which are favourable for finding a path for the route to be searched. The present invention is also directed to a navigation device implementing a method of route searching according to the invention.

### Description of the Related Art

In the related art there are known car navigation devices that calculate a recommended route from a start point through waypoints to a destination and provide route guidance based upon the calculated recommended route. The waypoints and the destination used in route calculation in such a car navigation device are specific geographic points such as intersections, cities, facilities, etc., specified by the user.

Specifically, an on-vehicle navigation device detects the position of the vehicle, reads map data around the vehicle position from a map storage medium such as a DVD, and depicts the map on a display screen with a vehicle position marker superimposed at the vehicle's location on the map. In such an on-vehicle navigation apparatus, a route searching method may be provided to search a path for the route to enable travel from a starting point to a destination. Before determining the route, the user may indicate to the navigation device whether the user prefers the shortest time and/or the shortest distance from the start point to the destination as a basis for calculating the route. After route calculation, the path indicative of the calculated route is displayed in a highlighted manner on the map display screen, so that it can be distinguished from the other roads.

In a method of route searching, map information is provided from the map storage medium such as the DVD, which map information includes relevant geographic data as a basis for the route calculation. Particularly, in such provided map data a road is indicated by a set of nodes, each of which is represented by longitudinal and latitudinal coordinates. A map information such as a road can be depicted on the map display screen by sequentially connecting the nodes with straight lines. An interconnection which is connecting nodes at both of its ends is called a link. Therefore, a road having a longer length is formed by a number of interconnected links.

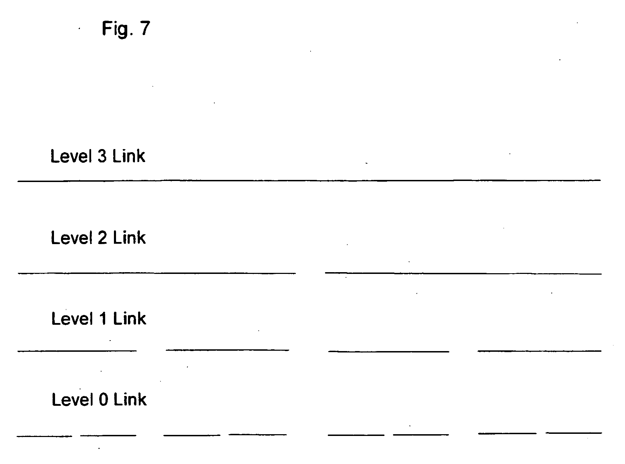

Further, map information data such as the link data as explained above is generally divided into a plurality of levels (hierarchical layers) each corresponding to one of different scaling factors. In this regard, the data base storing the map information and link information is organized into layers of information regarding meshes. For example, there is known a four physical level organization known as level zero meshes, level one meshes, level two meshes and level three meshes. The difference between these meshes is particularly the size of the links in each one of the meshes, such as shown in a schematic manner in Figure 7.

Figure 7 particularly shows a diagram schematically illustrating how lower level links are combined into a respective higher level link when being used in a process for route calculation. For example, a level one link of level one mesh represents a combination of several level zero links of the level zero mesh. The advantage of organizing the link data into hierarchical levels each having different information amount is that, at level one for example, one could save memory by combining several links of level zero as one link, thus using only one information portion for storing a single link rather than for storing several links of a lower link level. In the level zero mesh, for example, there are stored links of all functional classes, that is for instance including all links with respect to small regional roads as well as links with respect to main roads or highways. As such, the level zero mesh includes the highest data amount of all hierarchical meshes available from the map storage medium.

In the process of route calculation, the art of using different mesh levels in an advantageous manner is known as climbing, as disclosed e.g. in JP 2653847 B. An implemented climbing technique decides when to use a higher-level mesh with lower map information amount during the expansion of a route. For example, a generic algorithm climbs once an accumulated distance calculated from the lengths of the links of a particular mesh level and the number of nodes in between the links have reached a certain amount. When the decision to climb is made, the process of route calculation uses links of a higher mesh level, thus saving calculation process time as a matter of the reduced data amount thanks to the data structure of the higher mesh level. This is particularly important for the reason that the user of a route searching navigation device is not only interested in the quality of the route, but also interested in a rather low time necessary to produce the route. In this regard, an improved navigation device is capable of route searching with rather fast speed and rather good quality. However, the quality of the route calculation solution and the time required for the route search are often in an inverse relationship.

Further, another challenge exists with implementing a so-called Download Application Mode (DLAM) in a navigation device as a rather new feature requirement for navigation devices. In this DLAM, the map storage medium such as the DVD is taken out from the device so that the user may use, for instance, the DVD-slot for inserting a music CD in order to listen to music during driving. When the DVD is taken out of the navigation device, a corridor along the route or a basic corridor is downloaded from the data base of the DVD to an internal memory portion of the navigation device, such as a NAND flash memory. The corridor is mainly consisting of data belonging to level zero meshes. Accordingly, the problem arises that the route calculation algorithm cannot use the climbing technique as explained above.

In the DLAM, thus the climbing technique cannot be applied which, however, reduces memory space required for route calculation and also the size of the so-called link list. In a link list, links are stored in an expansion process for finding a path for the route to be searched in a sequential manner, wherein the link list stores links found from the database which are favourable for finding a path for the route to be searched. Usually, the link list is stored in a local memory, wherein the links in the link list are stored in a sorted manner in ascending order. When a new link is to be added to the link list during the expansion process, the link list should be sorted once again. In this regard, the longer the size of the link list, the longer is the time for sorting and inserting a new link at the correct position into the link list. When the common climbing technique is applied, each time when the process climbs from a lower level mesh to a higher level mesh, the link list is flushed as a matter of the different data structure as explained above. Thereby, the size of the link list becomes shorter after a climbing step.

However, in the DLAM, as there are no higher-level meshes downloaded to the internal memory portion of the navigation device, such as the NAND flash memory, the process cannot perform climbing. Therefore, this leads to the problem that the link list used for route calculation cannot be flushed or reduced. During the expansion process, the size of the link list grows, so that an internal memory portion of the navigation device is needed with a correspondingly increased storing capacity. Further, the time for insertion of a new link into the link list and the sorting of the link list with insertion of the new element increases with the size of the link list. However, this is adverse to the aim of providing a navigation device which may perform route calculation with faster speed.

### Summary of the Invention

It is therefore an object of the present invention to provide a method of route searching in a navigation device for searching a route leading to a destination which is capable of performing route calculation on the basis of low level mesh data in a more efficient way.

The invention is directed to a method of route searching in a navigation device for searching a route leading to a destination according to the features of claim 1. Further, the invention is directed to a navigation device comprising a navigation control device which is arranged for executing such method of route searching according to the features of claim 10.

According to the invention, there is provided a method of route searching in a navigation device for searching a route leading to a destination, comprising the steps of providing map information including a plurality of links, wherein a respective link is connecting nodes at both of its ends, each link having associated information for characterizing the respective link, the associated information including at least the length of the respective link, wherein the step of providing map information includes providing links of only a lower mesh-level from a plurality of hierarchical mesh-levels. In an expansion process for finding a path for the route to be searched, the links are stored sequentially in a link list which is indicative of links which are favourable for finding a path for the route to be searched. In a further step, an accumulated distance calculated from the lengths of the links of the link list and the number of nodes in between the links is determined, and it is further determined whether the accumulated distance and the number of nodes each have reached a respective predetermined value. In the event that the accumulated distance and the number of nodes each have reached the respective predetermined value, at least one link is eliminated from the link list thereby reducing the size of the link list. In this way, the technique of climbing is not used.

According to the invention, the method of route searching may perform route calculation in a more efficient way even when carried out only on the basis of low level mesh data, such as in a Download Application Mode as explained above. The method according to the invention involves cutting/shrinking the size of the link list, so that the time for route calculation is reduced as a matter of significantly reducing the time involved with sorting and inserting an element into the link list. The time involved with sorting and inserting an element into the link list is reduced as a matter of the reduced/shrunk size of the link list. On the other hand, the eliminating of at least one of the links from the link list may be performed in such a way that the quality of route calculation is not, or at least not significantly affected.

According to an embodiment of the invention, the step of providing map information including a plurality of links includes providing links of only a level-zero-mesh, such as used for instance in the so-called Download Application Mode (DLAM). Therefore, the method according to the present invention may advantageously be used in a process of route calculation which does not use the external map data storage medium, typically a DVD, loaded into the navigation device. Therefore, the present invention is applicable to be used in connection with this new feature requirement, so that fast and efficient route calculation may be performed, and at the same time the user may use the slot for the navigation DVD for inserting, for example, a music DVD or CD. In other words, fast and efficient route calculation may also be performed in the absence of the navigation DVD. At the same time the storage capacity for the internal memory portion may be kept rather low. Thus, the method according to the invention may be advantageously performed in a Download Application Mode, wherein the step of providing map information includes providing selected map information from a removable map data storage medium, such as the DVD, which is unused during the expansion process, into an internal memory of the navigation device.

According to embodiments of the present invention, there have been discovered several methods of reducing or shrinking the size of the link list.

According to a first embodiment, the method includes, in the expansion process for finding a path for the route to be searched, a step of calculating for the links to be stored in the link list the cost associated with a respective one of the links, wherein the calculated cost serves as an evaluation function in the process of searching the route. Particularly, the higher the cost calculated for a re-spective link, the lower is the probability that the link is useful in finding the path for the route to be searched. The method further includes the step of defining at least one boundary value with respect to the calculated cost, wherein the step of eliminating at least one link from the link list, i.e. the step of shrinking the link list, includes eliminating a link having associated cost which is higher than the boundary value. In other words, according to this embodiment links are removed which have higher cost. Based on a tune value for normal route calculation, the boundary value is defined, and from this boundary value onwards, the links in the link list are removed.

According to another embodiment, the associated information for each link includes the functional class of the respective link, and the step of eliminating at least one link from the link list includes eliminating a link on the basis of its functional class. For example, the step of eliminating at least one link from the link list includes eliminating a link having a higher functional class than a functional class of at least one of the remaining links of the link list. This embodiment is based on the fact that a higher climbing level using link data of a higher level mesh neglects links with some functional classes, particularly links having a higher functional class indicative of smaller roads, as explained in more detail below.

According to a further embodiment of the invention, the step of eliminating at least one link from the link list includes eliminating a link having a predetermined position in the link list. For example, it may be decided to remove links within a particular part of the link list, for example removing 1/3 portion of the link list. The remaining 2/3 portion of the link list is maintained. This results in somehow "blindly" trimming the link list based on a predetermined position of a respective link.

Particularly, the method may include the step of sorting the link list in a given order, wherein the step of eliminating at least one link from the link list includes eliminating a link having a predetermined position with respect to a first link in the link list. For example, when the link list is sorted in an ascending order, providing the most useful links at the left hand side of the link list, for example 1/3 of the right hand part of the link list may be removed. The probability that this part of the link list is useful for finding a path of the route to be searched is rather low, so that the quality of the searched route is not, or at least not substantially affected with shrinking of the link list in this manner.

Further advantageous embodiments of the invention are evident from the dependent claims.

The method of route searching according to the present invention is particularly applicable in car navigation devices, for example having a central console including a navigation device and other infotainment and/or entertainment devices such as radio or TV. As the present invention may be applied in connection with a Download Application Mode as explained above, the invention is particularly useful in applications which use a common part for inserting or connecting a navigation storage medium such as a DVD and, for example, a non-navigation-related storage medium such as a music CD. However, the invention is not limited to on-vehicle navigation devices, but may be used in various applications implementing route searching.

### Brief Description of the Drawings

The invention will now be explained in view of the accompanying drawings for illustrating various embodiments of the invention.
- Figure 1: is a schematic diagram of an exemplary on-vehicle navigation device embodying the present invention;
- Figure 2: is a diagram illustrating an exemplary map data storage technique in a process of route searching;
- Figure 3: is a diagram illustrating an exemplary mesh of roads defined by link data;
- Figure 4: is a drawing schematically illustrating an exemplary link list used in a process of route calculation;
- Figure 5: is a flow chart diagram illustrating a process of route calculation according to an embodiment of the present invention;
- Figure 6: is a flow chart diagram illustrating a known process of route calculation;
- Figure 7: is a diagram showing schematically how lower level links are combined to a respective higher level link in a known process of route calculation.

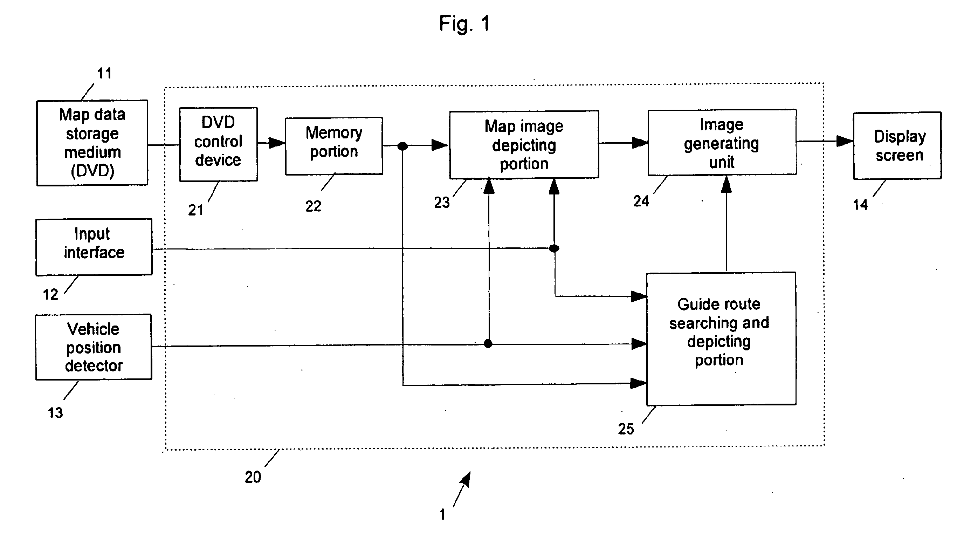

Figure 1 is a general schematic diagram of an exemplary on-vehicle navigation device 1 embodying the present invention. Reference numeral 11 denotes an external map data storage medium for storing map information, such as a DVD (digital versatile disc). Reference numeral 20 denotes a navigation control device which comprises subunits which generate a map image around the vehicle position using the map data, and perform route searching for finding an optimal path for the route to be searched. From the map data storage medium 11, which is under control of a DVD control device 21, map information available is loaded into a memory portion 22 which is an internal memory portion of the navigation device such as a NAND flash memory. Data from the memory portion 22 are loaded into a map image depicting portion 23 which is connected with an image generating unit 24 for generating a map image on a display screen 14. The map image depicting portion 23 reads a set of relevant map data from the internal memory portion 22 and produces data to the image generating unit 24. The image generating unit 24 may include a suitable circuitry for composing a map image including, for example, a vehicle position mark indicating the current vehicle position superimposed on the map image. The image generating unit 24 also serves for superimposing a path of a searched route onto the map image, for example in a manner that the route path is highlighted in order for the user to easily distinguish the route from the remainder of the displayed map data.

The navigation control device 20 further includes a guide route searching and depicting portion 25 for searching a route leading to a destination and for generating a guide route image on the basis of route data calculated in the route search process. The image generating unit 24 may, for example, include a video-RAM for storing the map image from the map image depicting portion and the guide route image from the guide route searching and depicting portion 25. The map image depicting portion 23 and the guide route searching and depicting portion 25 are both connected with a vehicle position detector 13, so that the map image displayed on the display screen 14 may be generated in accordance with the vehicle's motion. The guide route searching and depicting portion 25 is also connected with the memory portion 22 for calculating a search for a guide route from a starting point to a destination based on the map information. The navigation control device 20, particularly the map image depicting portion 23 and the guide route searching and depicting portion 25 are connected with an input interface 12 for receiving respective user's instructions, for instance with regard to the scale of the displayed map and for entering instructions, waypoints and destination points as a basis for the route to be searched.

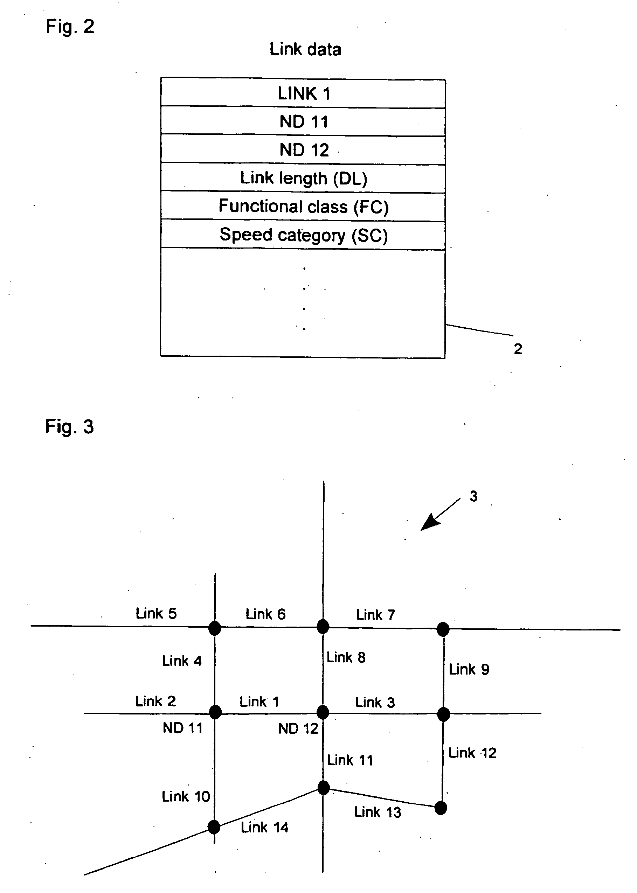

Figure 2 depicts a diagram illustrating an exemplary map data storage in a process of route searching. The map information provided from the map data storage medium 11 according to Figure 1 includes a plurality of links, wherein a respective link is connecting nodes at both of its ends. In this way, a portion of a road connecting two nodes is represented by a link. A node may be in principle any geographic point of interest, for example an intersection in a traffic network. Each link stored in the data base has associated information for characterizing the respective link. According to Figure 2, an example is depicted for a link denoted as Link 1. The associated information 2 for Link 1 (link data), as shown in Figure 2, contains the nodes ND11, ND12 at a respective end of the link, the link length DL, the functional class FC of the link, the speed category SC specifying the speed limit in the link, and if necessary any further information associated with the respective link which may be of interest.

The functional class FC of a link is indicative of a functional factor of the respective link, taking into consideration for example the width of the link or the number of lanes, the speed limit, or the like. Generally, the functional classes are divided into multiple classes, such as FC=0-7. A functional class link FC=0 is indicative of a main road such as a freeway, highway or Autobahn; FC=1 denotes a first class road, and so on, whereas a link having functional class FC=4 is indicative of a fourth class road, such as a road of only regional importance which is smaller than a state road or the like. Functional classes FC=6, FC=7 are indicative of ferry by ship and ferry by train, respectively. At level zero meshes (Figure 7) all links with functional classes FC=0 to FC=7 are present, whereas level one mesh does not store links with functional class FC=4, and level two mesh does not store links with functional class FC=3, and so on.

Figure 3 depicts a diagram illustrating an exemplary mesh of roads defined by link data of a plurality of links provided with the map information. The mesh 3 according to Figure 3 includes the Link 1 of Figure 2 connecting the nodes ND11 and ND12 at both of its ends. The mesh 3 of roads includes an exemplary number of links denoted as Link 1 to Link 14. For example, a road may be defined by the interconnection of Link 2, Link 1, Link 3 with intersections for example at node ND11 and node ND12. If a path of a route to be searched includes this road, a corresponding link list would include the information 2 according to Figure 2 for each of Link 2, Link 1, and Link 3.

Generally, route calculation is performed between two given points. The first point is the point of the vehicle's current position and the other point is the destination. In order to find a route between these two points, a so-called expansion from both of these points is performed in opposite direction to each point, such that the route meets in the middle between these two points. The expansion is performed from the mesh where these two points reside. In order to perform expansion, the calculation process has to acquire data with the complete information regarding the meshes from the data base. The information received on these meshes may be for example speed category, functional class type, direction, etc.. The acquired information is then loaded into an internal memory portion, also known as cache memory of the system.

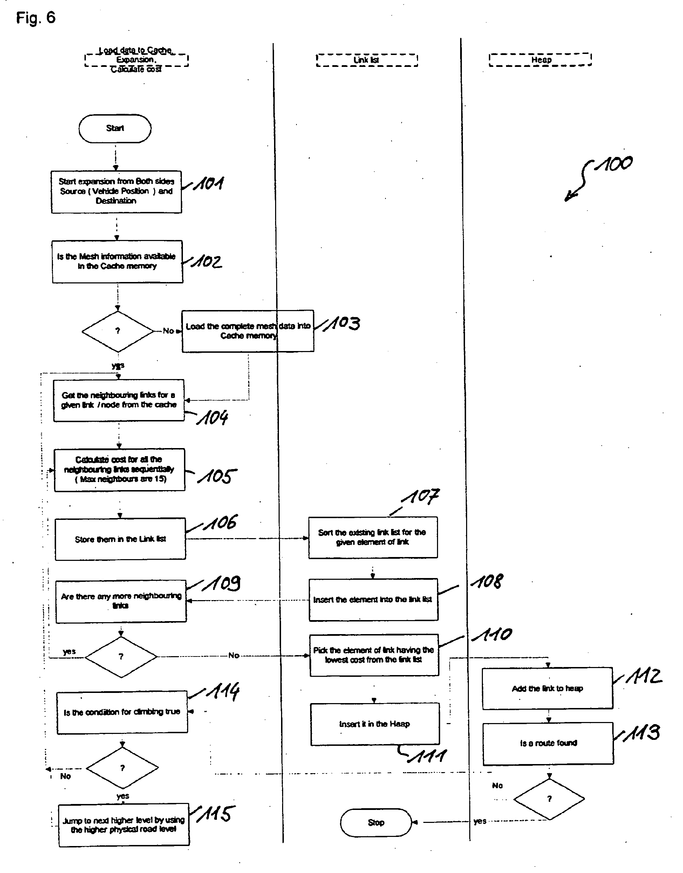

In the following, reference is made to Figure 6 showing a flow chart diagram illustrating a known process of route calculation, in order for a better understanding of the present invention. The process 100 according to Figure 6 includes a step 101 for starting expansion from both sides, i.e., a source point (vehicle position) and a destination point, as explained above. In step 102, it is decided whether the mesh information is available in the cache memory, if this is not the case, in step 103 the complete mesh data is loaded into the cache memory. The process then proceeds to step 104 for getting the neighbouring links for a given link/node from the cache memory. In step 105, the cost is calculated for a given one of the neighbouring links.

In this concern, the calculated cost associated with the respective one of the links serves as an evaluation function in the process of searching the route. For example, an algorithm for finding a shortest-length route or a shortest-time route may use the calculated cost as a basis for calculating such route. The search algorithm uses the cost as an evaluation function in order to find a route which has a minimum accumulated cost for all the links used in the route path. Therefore, the route calculation process chooses the best match for finding a route from the information available from the cache memory based on performing costing on the links. Generally costing is performed based on the link length, speed category, type of the link, functional class, etc.. The calculation of the cost for a respective link is a known technique which the skilled person is aware of, so that any further discussion in this regard will be omitted for the reasons of brevity.

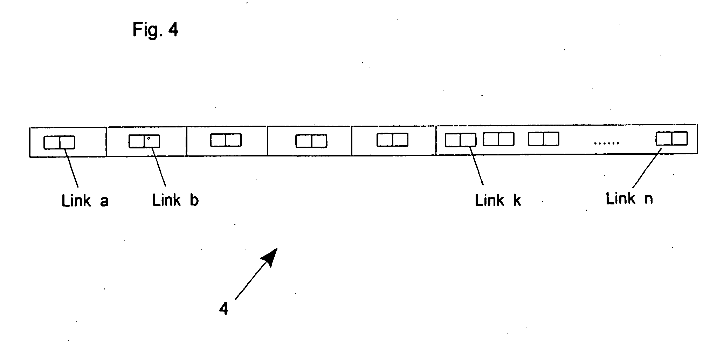

In order to store the links as a basis for route planning or calculation, a so-called link list is used. According to step 106, the respective link for which the associated cost has been calculated is stored in the link list, such as illustrated in an exemplary manner in Figure 4. Figure 4 depicts a drawing schematically illustrating an exemplary link list used in a process of route calculation. In the present example, it contains a number of links denoted as Link a, Link b up to Link n. As illustrated in Figure 4, each link is stored as a so-called SHORT using 2 bytes for storing the information 2 according to Figure 2 associated with each link. In Figure 4, a respective SHORT is represented schematically by two rectangles belonging to a corresponding link.

In the present embodiment, the links in the link list 4 are stored in an ascending order in a sorted manner, particularly in that the links having associated lower costs are stored on the left hand side of the link list 4, whereas links having associated higher costs are stored on the right hand side of the link list. In step 107 according to Figure 6, the given link for which the associated cost has been calculated in step 105 is sorted in the existing link list. Particularly, as an example, Link b has an associated cost which is higher than the cost of Link a, but which is lower than the cost of the remaining links in the link list 4, so that Link b is stored at the second position with respect to the first link Link a in the link list. In step 108, the respective link is inserted into the link list. In step 109 it is decided whether there are any more of the neighbouring links remaining which have been determined in step 104, and if there is any link remaining, the process returns to step 105.

In the event that the process of steps 105 to 109 has completed for all of the neighbouring links determined in step 104, the process proceeds to step 110 in which the element of link having the lowest cost is picked from the link list to be inserted into the so-called heap. In step 111, the respective link is inserted into the heap which indicates a kind of set of links which are used for finding a path of the route. According to step 112, the link is added to the heap, and in step 113 it is determined whether a route is found using the links stored in the heap. If a route is found in step 113, the process is completed, otherwise the process proceeds to step 114 which determines whether the condition for climbing is true.

As described in the introductory part of the description, climbing is known as technique of using different mesh levels, as illustrated with reference to Figure 7. In the general process of route calculation, when it comes to the decision whether to climb or not, the process decides whether and when to use a higher-level mesh during expansion of a route. As already discussed previously, each of the different mesh levels stores links having particular functional classes. The generic algorithm climbs once an accumulated distance calculated from the length DL of the links of the link list 4 and the number of nodes ND inbetween the links have reached a respective predetermined value. In other words, it is determined during the expansion process whether a condition is met to use links of a higher mesh-level, known as climbing. In the event that the accumulated distance and the number of nodes each have reached the respective predetermined value, the process uses links of a higher mesh level. This is denoted in step 115 in which the process uses the next higher level by using the higher physical road level (a lower functional class). Thereafter, the process returns to step 104.

According to the present invention, the method may be performed in a Download Application Mode, DLAM, in which map information is provided in the form that selected map information from a removable map data storage medium, such as map data storage medium 11 according to Figure 1, is provided into an internal memory, such as memory 22 of Figure 1, of the navigation device. In the DLAM, the storage medium 11 is then unused during the expansion process. Before the storage medium 11, such as the DVD, is taken out of the navigation device, a corridor along the route or a basic corridor is downloaded from the data base of the DVD.

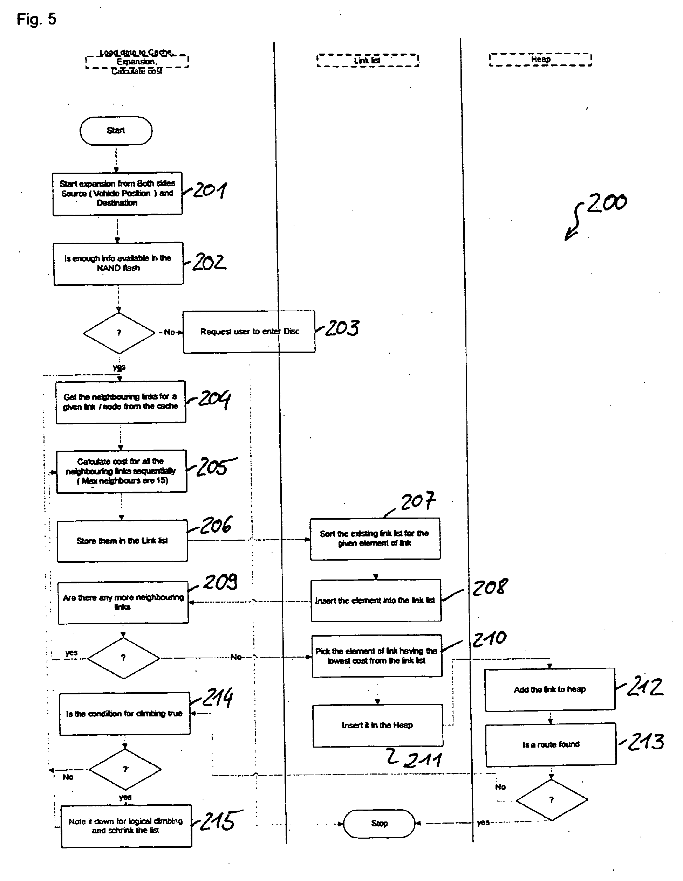

Now referring to the process as illustrated in Figure 5, the above method steps are carried out with method steps 201 and 202 of the process 200. In step 202, it is determined whether enough information is available in the NAND flash memory (memory portion 22). If not, then the user is requested to (re-)enter the DVD (step 203). If enough information is available in the memory, then the process proceeds to step 204 similar to step 104 as already discussed with reference to Figure 6. In the following, the process steps 204 to 213 are substantially the same as the process steps 104 to 113 as already discussed with reference to Figure 6.

In step 214, a similar decision is taken as discussed with reference to step 114 in Figure 6. In other words, it is determined an accumulated distance calculated from the lengths DL of the links of the link list 4 and the number of nodes ND inbetween the links, thus determining during the expansion process whether a condition is met to use, in principle, links of a higher mesh-level, if available. However, in process 200, when the decision to climb arrives, the process cannot climb in the case of DLAM. This results from the fact that the data stored in the memory portion 22 consist only of level zero mesh data. However, in step 214 it is nevertheless determined if the accumulated distance and the number of nodes each have reached the respective predetermined value, thus denoting a kind of logical climbing step, and if this condition is true, at least one link is eliminated from the link list 4, thereby reducing the size of the link list. This is denoted in Figure 5 with step 215. In other words, instead of climbing, the process starts some kind of overlooking the links stored in the link list 4 and eliminates a predetermined number of links in the link list such that the size of the link list is reduced. This provides the advantage that with a lower size of the link list the process of sorting a given one of the links into the link list, and thus the overall calculation process, is faster than any conventional process which uses a link list for storing the link data which is continuously growing when route calculation is expanding. Moreover, the data amount to be stored in the guide route searching and depicting portion 25 according to Figure 1 is also reduced.

In step 215 according to Figure 5 the following embodiments may be implemented for reducing the size of the link list. In a first embodiment, the method for reducing the size of the link list may be based on the calculated costs for each link. In this regard, the basic idea is to remove links from the link list with higher cost. Based on a tune value for normal route calculation, for each (logical) climbing level there is defined at least one boundary value with respect to the calculated cost. As such, a link having associated cost which is higher than the boundary value is eliminated from the link list. In the example of Figure 4, it is assumed that Link k has an associated cost which is higher than the boundary value, so that all links between Link k and Link n in the link list 4 are removed from the link list.

This process may be repeated for each logical climbing level. For example, after determining for the first time that the accumulated distance and the number of nodes each have reached the respective predetermined value, a logical climbing mark is set. Once the process again returns to step 214 according to Figure 5, it is determined whether another accumulated distance calculated from the lengths of the links of the link list and the number of nodes inbetween the links each have reached a respective second predetermined value, thus determining during the expansion process whether another condition is met to use links of another higher mesh-level (second climbing) if available. Therefore, for each logical climbing level there is defined a respective predetermined value. Additionally, for each logical climbing level there is defined a respective boundary value with respect to the calculated cost, wherein the boundary value for the second logical climbing level is increased with respect to the first boundary value, because the lengths of the links are increasing with each logical climbing level. In the event that the accumulated distance and the number of nodes each have reached the respective second predetermined value (denoting a second logical climbing step), at least another link from the link list having associated cost which is higher than the second increased boundary value is eliminated. Particularly, when having a link list in a sorted manner, the links from the second increased boundary value onwards are removed.

In a second embodiment of reducing the size of the link list, the step 215 includes eliminating at least one link on the basis of its functional class FC. For example, the links from Link k to Link n in the link list 4 have a higher functional class FC than a functional class FC of the remaining links such as Link a and Link b. This method is based on the fact that any higher climbing level neglects some of the functional classes FC. For example, when arriving at the first logical climbing level, all links with functional class FC=4 are removed, whereas links having functional classes FC=0 to 3 are remaining in the link list. This procedure is set forth with removing links having FC=3 accordingly when arriving the second logical climbing step and so on.

In another embodiment of the invention, the link list may be "blindly" trimmed, for example by maintaining 2/3 of the link list, and removing the remaining 1/3 of the list, just as an example. For instance, according to Figure 4, the links from Link k to Link n belong to the 1/3 portion of the link list 4 which is to be removed. This is based on the consideration that the right hand part of the link list 4 is probably not suitable for finding a shortest and/or fastest route to a destination, so that links may be removed from the link list based on a predetermined position in the link list. If the link list is in a sorted order, for example ascending order, the predetermined position as a boundary for eliminating all links in the link list beyond that position may be determined with respect to a first link in the link list, such as Link a in link list 4.

Thus, the link list is cut at the end removing links having rather high cost which would not be suitable for finding a path of a route to be searched. Therefore, the process of route calculation becomes faster and more efficient without substantially affecting the route calculation quality.

## Claims

1. A method of route searching in a navigation device (1) for searching a route leading to a destination, comprising the steps of:
- providing map information including a plurality of links (Link), wherein a respective link (Link 1) is connecting nodes (ND11, ND12) at both of its ends, each link having associated information (2) for characterizing the respective link, the associated information including at least the length (DL) of the respective link, wherein the step of providing map information includes providing links of only a lower mesh-level (Level 0) from a plurality of hierarchical mesh-levels,
- in an expansion process for finding a path for the route to be searched, sequentially storing links (Link a - Link n) in a link list (4) which is indicative of links which are favourable for finding a path for the route to be searched,
- determining an accumulated distance calculated from the lengths (DL) of the links of the link list (4) and the number of nodes (ND) in between the links, and determining whether the accumulated distance and the number of nodes each have reached a respective predetermined value,
- in the event that the accumulated distance and the number of nodes each have reached the respective predetermined value, eliminating at least one link (Link k - Link n) from the link list (4) thereby reducing the size of the link list.

2. The method according to claim 1, wherein
the step of providing map information including a plurality of links includes providing links of only a level-zero-mesh.

3. The method according to claim 1 or 2, wherein
the step of providing map information includes providing selected map information from a removable map data storage medium (11), which is unused during the expansion process, into an internal memory (22) of the navigation device, particularly wherein the method is performed in a Download Application Mode, DLAM.

4. The method according to one of claims 1 to 3, further comprising the steps of:
- in the expansion process for finding a path for the route to be searched, calculating for the links to be stored in the link list (4) the cost associated with a respective one of the links as an evaluation function in the process of searching the route,
- defining at least one boundary value with respect to the calculated cost,
- wherein the step (215) of eliminating at least one link from the link list (4) includes eliminating a link (Link k - Link n) having associated cost which is higher than the boundary value.

5. The method according to claim 4, further comprising the steps of:
- after determining that the accumulated distance and the number of nodes each have reached the respective predetermined value, determining another accumulated distance calculated from the lengths (DL) of the links of the link list (4) and the number of nodes (ND) in between the links, and determining whether the accumulated distance and the number of nodes each have reached a respective second predetermined value,
- defining a second increased boundary value with respect to the calculated cost,
- in the event that the accumulated distance and the number of nodes each have reached the respective second predetermined value, eliminating another link (Link k - Link n) from the link list having associated cost which is higher than the second increased boundary value.

6. The method according to one of claims 1 to 5, wherein
- the associated information (2) for each link includes the functional class (FC) of the respective link, and
- the step (215) of eliminating at least one link from the link list (4) includes eliminating a link (Link k - Link n) on the basis of its functional class (FC).

7. The method according to claim 6, wherein
the step (215) of eliminating at least one link from the link list (4) includes eliminating a link (Link k - Link n) having a higher functional class (FC) than a functional class (FC) of at least one of the remaining links (Link a, Link b) of the link list.

8. The method according to one of claims 1 to 7, wherein
the step (215) of eliminating at least one link from the link list (4) includes eliminating a link (Link k - Link n) having a predetermined position in the link list.

9. The method according to claim 8, wherein
the method includes the step (207) of sorting the link list (4) in a given order, and the step (215) of eliminating at least one link from the link list (4) includes eliminating a link (Link k - Link n) having a predetermined position with respect to a first link (Link a) in the link list.

10. A navigation device (1), comprising a navigation control device (20, 25) arranged for executing a method of route searching according to one of claims 1 to 9.

## Patentansprüche

1. Verfahren zur Routensuche in einer Navigationsvorrichtung (1) zur Suche einer Route, die zu einem Ziel führt, aufweisend die Schritte:
- Bereitstellung einer Karteninformation beinhaltend eine Mehrzahl von Links (Link), wobei ein jeweiliger Link (Link 1) Knoten (ND11, ND12) an beiden seiner Enden verbindet, wobei jeder Link eine assoziierte Information (2) zur Charakterisierung des jeweiligen Links aufweist, wobei die assoziierte Information wenigstens die Länge (DL) des jeweiligen Links beinhaltet, wobei der Schritt des Bereitstellens von Karteninformation beinhaltet das Bereitstellen von Links von nur einem niedrigen Netz-Niveau (Level 0) aus einer Mehrzahl von hierarchischen Netz-Niveaus,
- wobei in einem Expansionsprozess zum Finden eines Pfads für die zu suchende Route Links (Link a - Link n) in einer Link-Liste (4) sequentiell gespeichert werden, welche bezeichnend ist für Links, welche günstig sind, einen Pfad für die zu suchende Route zu finden,
- Bestimmung einer angehäuften Distanz, die von den Längen (DL) der Links der Link-Liste (4) berechnet wird, und der Anzahl von Knoten (ND) zwischen den Links und Bestimmen, ob die angehäufte Distanz und die Anzahl von Knoten jeweils einen jeweiligen vorbestimmten Wert erreicht haben,
- in dem Fall, dass die angehäufte Distanz und die Anzahl von Knoten jeweils den jeweiligen vorbestimmten Wert erreicht haben, Entfernen wenigstens eines Links (Link k - Link n) von der Link-Liste (4), wobei dadurch die Größe der Link-Liste reduziert wird.

2. Verfahren nach Anspruch 1, wobei der Schritt des Bereitstellens von Karteninformation beinhaltend eine Mehrzahl von Links ein Bereitstellen von Links von nur einem Niveau-Null-Netz beinhaltet.

3. Verfahren nach Anspruch 1 oder 2, wobei der Schritt des Bereitstellens von Karteninformation ein Bereitstellen von ausgewählter Karteninformation von einem entfernbaren Kartendatenspeichermedium (11) beinhaltet, welches während des Expansionsprozesses nicht benutzt wird, in einen internen Speicher (22) der Navigationsvorrichtung, insbesondere wobei das Verfahren in einem Herunterlade-Applikationsmodus (Download Application Mode), DLAM durchgeführt wird.

4. Verfahren nach einem der Ansprüche 1 bis 3, weiterhin aufweisend die Schritte:
- in dem Expansionsprozess zum Finden eines Pfads für die zu suchende Route werden für die Links, die in der Link-Liste (4) zu speichern sind, die Kosten berechnet, die mit einem jeweiligen der Links als eine Evaluierungsfunktion in dem Prozess des Suchens der Route assoziiert sind,
- es wird wenigstens ein Grenzwert mit Bezug auf die berechneten Kosten definiert,
- wobei der Schritt (215) des Entfernens von wenigstens einem Link aus der Link-Liste (4) ein Entfernen eines Links (Link k - Link n) beinhaltet, der assoziierte Kosten hat, welche höher sind als der Grenzwert.

5. Verfahren nach Anspruch 4, weiterhin aufweisend die Schritte:
- nach dem Bestimmen, dass die angehäufte Distanz und die Anzahl von Knoten jeweils den jeweiligen vorbestimmten Wert erreicht haben, Bestimmen einer anderen angehäuften Distanz, die von den Längen (DL) der Links der Link-Liste (4) berechnet wird, und der Anzahl von Knoten (ND) zwischen den Links und Bestimmen, ob die angehäufte Distanz und die Anzahl von Knoten jeweils einen jeweiligen zweiten vorbestimmten Wert erreicht haben,
- Definieren eines zweiten erhöhten Grenzwerts mit Bezug auf die berechneten Kosten,
- wobei in dem Fall, dass die angehäufte Distanz und die Anzahl von Knoten jeweils den jeweiligen zweiten vorbestimmten Wert erreicht haben, Entfernen eines anderen Links (Link k - Link n) von der Link-liste mit assoziierten Kosten, welche höher sind, als der zweite erhöhte Grenzwert.

6. Verfahren nach einem der Ansprüche 1 bis 5, wobei
- die assoziierte Information (2) für jeden Link die Funktionsklasse (FC) des jeweiligen Links beinhaltet, und
- der Schritt (215) des Entfernens wenigstens eines Links aus der Link-Liste (4) ein Entfernen eines Links (Link k - Link n) auf der Basis seiner Funktionsklasse (FC) beinhaltet.

7. Verfahren nach Anspruch 6, wobei der Schritt (215) des Entfernens wenigstens eines Links aus der Link-Liste (4) ein Entfernen eines Links (Link k - Link n) mit einer höheren Funktionsklasse (FC) beinhaltet als eine Funktionsklasse (FC) wenigstens eines der verbleibenden Links (Link a, Link b) der Linkliste.

8. Verfahren nach einem der Ansprüche 1 bis 7, wobei der Schritt (215) des Entfernens wenigstens eines Links aus der Link-Liste (4) ein Entfernen eines Links (Link k - Link n) mit einer vorbestimmten Position in der Link-Liste beinhaltet.

9. Verfahren nach Anspruch 8, wobei das Verfahren den Schritt (207) des Sortierens der Link-Liste (4) in einer gegebenen Reihenfolge beinhaltet, und der Schritt (215) des Entfernens wenigstens eines Links aus der Link-Liste (4) ein Entfernen eines Links (Link k - Link n) mit einer vorbestimmten Position mit Bezug auf einen ersten Link (Link a) in der Link-Liste beinhaltet.

10. Navigationsvorrichtung (1) mit einer Navigationssteuerungsvorrichtung (20, 25), die eingerichtet ist, ein Verfahren zur Routensuche gemäß einem der Ansprüche 1 bis 9 auszuführen.

## Revendications

1. Procédé de recherche d'itinéraire dans un dispositif de navigation (1) pour rechercher un itinéraire menant à une destination, comprenant les étapes de :
- fourniture d'informations cartographiques comprenant une pluralité de segments (Link), un segment respectif (Link 1) reliant des noeuds (ND11, ND12) situés à ses deux extrémités, chaque segment ayant des informations correspondantes (2) pour caractériser le segment respectif, les informations correspondantes comprenant au moins la longueur (DL) du segment respectif, l'étape de fourniture d'informations cartographiques comprenant la fourniture de segments uniquement d'un niveau de maillage inférieur (Level 0) parmi une pluralité de niveaux de maillage hiérarchisés,
- lors d'un processus d'extension visant à trouver un trajet pour l'itinéraire à rechercher, mémorisation séquentielle de segments (Link a - Link n) sur une liste (4) de segments qui indique des segments favorables pour trouver un trajet pour l'itinéraire à rechercher,
- détermination d'une distance cumulée calculée d'après les longueurs (DL) des segments de la liste (4) de segments et le nombre de noeuds (ND) entre les segments, et détermination de ce que, oui ou non, la distance cumulée et le nombre de noeuds ont atteint chacun une valeur respective prédéterminée,
- dans le cas où la distance cumulée et le nombre de noeuds ont atteint chacun la valeur respective prédéterminée, suppression d'au moins un segment (Link k - Link n) de la liste (4) de segments, ce qui réduit donc la longueur de la liste de segments.

2. Procédé selon la revendication 1, dans lequel
l'étape de fourniture d'informations cartographiques comprenant une pluralité de segments comprend la fourniture de segments uniquement d'un maillage de niveau zéro.

3. Procédé selon la revendication 1 ou 2, dans lequel
l'étape de fourniture d'informations cartographiques comprend le transfert de certaines informations cartographiques d'un support amovible (11) de stockage de données cartographiques, lequel n'est pas utilisé durant le processus d'extension, à une mémoire interne (22) du dispositif de navigation, en particulier dans lequel le procédé est mis en oeuvre dans un Mode d'Application à Téléchargement, DLAM.

4. Procédé selon l'une quelconque des revendications 1 à 3, comportant en outre les étapes de :
- dans le processus d'extension visant à trouver un trajet pour l'itinéraire à rechercher, calcul, pour les segments à enregistrer sur la liste (4) de segments, du coût associé à l'un, respectif, des segments en tant que fonction d'évaluation dans le processus de recherche de l'itinéraire,
- définition d'au moins une valeur limite par rapport au coût calculé,
- dans lequel l'étape (215) de suppression d'au moins un segment sur la liste (4) de segments comprend la suppression d'un segment (Link k - Link n) dont le coût associé est supérieur à la valeur limite.

5. Procédé selon la revendication 4, comportant en outre les étapes de :
- après la détermination de ce que la distance cumulée et le nombre de noeuds ont chacun atteint la valeur respective prédéterminée, détermination d'une autre distance cumulée calculée d'après les longueurs (DL) des segments de la liste (4) de segments et le nombre de noeuds (ND) entre les segments, et détermination de ce que, oui ou non, la distance cumulée et le nombre de noeuds ont chacun atteint une seconde valeur respective prédéterminée,
- définition d'une seconde valeur limite accrue par rapport au coût calculé,
- dans le cas où la distance cumulée et le nombre de noeuds ont chacun atteint la seconde vapeur respective prédéterminée, suppression d'un autre segment (Link k - Link n) de la liste de segments dont le coût associé est supérieur à la seconde valeur limite accrue.

6. Procédé selon l'une quelconque des revendications 1 à 5, dans lequel
- les informations correspondantes (2) pour chaque segment comprennent la catégorie fonctionnelle (FC) du segment respectif, et
- l'étape (215) de suppression d'au moins un segment de la liste (4) de segments comprend la suppression d'un segment (Link k - Link n) d'après sa catégorie fonctionnelle (FC).

7. Procédé selon la revendication 6, dans lequel
l'étape (215) de suppression d'au moins un segment de la liste (4) de segments comprend la suppression d'un segment (Link k - Link n) à catégorie fonctionnelle (FC) supérieure à une catégorie fonctionnelle (FC) d'au moins un des segments restants (Link a, Link b) de la liste de segments.

8. Procédé selon l'une quelconque des revendications 1 à 7, dans lequel
l'étape (215) de suppression d'au moins un segment de la liste (4) de segment comprend la suppression d'un segment (Link k - Link n) occupant une position prédéterminée sur la liste de segments.

9. Procédé selon la revendication 8, dans lequel
le procédé comporte l'étape (207) de tri de la liste (4) de segments dans un ordre donné et l'étape (215) de suppression d'au moins un segment de la liste (4) de segments comprend la suppression d'un segment (Link k - Link n) occupant une position prédéterminée par rapport à un premier segment (Link a) sur la liste de segments.

10. Dispositif de navigation (1), comportant un dispositif de commande de navigation (20, 25) conçu pour exécuter un procédé de recherche d'itinéraire selon l'une quelconque des revendications 1 à 9.
